# EUROPEAN PATENT APPLICATION

(11) **EP 1 559 477 A1**
(43) Date of publication of application: **03.08.2005**
(21) Application number: 03792836.3
(22) Date of filing: 25.08.2003
(51) Int. Cl.: B01J 37/00

(54) **PROCESS FOR PRODUCING INTEGRATED REACTIVE POROUS CARRIER**

(30) Priority: 26.08.2002 JP 2002244480
(71) Applicant: Kyoto Monotech Co., Kyoto-shi, Kyoto 603-8478 (JP)
(72) Inventor: SOGA, Naohiro, Kobe-shi, Hyogo 657-0067 (JP); NAKANISHI, Kazuki, Kyoto-shi, Kyoto 606-0806 (JP); DAVID, Avnir, 96908 Jerusalem (IL)
(74) Representative: Gassner, Wolfgang, Dr.
(86) International application number: PCT/JP2003/010716
(87) International publication number: WO 2004/018099

(57) **Abstract**

It is provided a monolithic reactive porous support with efficiency and performance better than a particulate support used in a batch method requiring a liquid-solid separation process or a filling column method requiring a high pressure for liquid supply. In a solution containing a starting material having a reactive site, a precursor of a monolithic porous gel formed of silica, a metal oxide, or an organic-inorganic hybrid composition is reacted. Accordingly, sol-gel transformation and phase separation are induced at the same time to form a gel of the composition having continuous pores with a diameter of 100 nm or greater.

## Description

### Technical Field

The present invention relates to a method of producing a monolithic reactive porous support having a reactive site on a backbone thereof.

### Background of the Invention

In a chemical reaction associated with at least one type of reaction substrate or catalyst immobilized on a support, a particulate porous material with a relatively large specific surface area is generally used. In many cases, such a particulate porous material is dispersed in a solution of a reaction substrate, so that a surface of the solid support contacts chemical species in the solution phase to perform a chemical reaction. When fine particles containing a reaction substrate or catalyst are dispersed in a solution, it is necessary to separate the fine particles from the solution after the reaction, thereby making the process complicated. As a method without the process of separating the fine particles from the solution, instead of dispersing the particulate support in the solution phase, the particulate support is filled in a reaction column. Then, a solution of a reaction substrate flows through the reaction column, so that a surface of the solid support contacts chemical species in the solution. However, in order to obtain efficient surface contact and flow the solution at a practical rate, it is necessary to optimize a shape, size, and size distribution of the particles, and a method of filling the particles, thereby making it difficult to obtain an efficient reactive support.

On the other hand, through a sol-gel process utilizing phase separation, it is well-known that a monolithic porous material can be manufactured with high reproducibility. The porous material includes silicon dioxide (silica), a metal oxide forming a gel network, and an organic-inorganic hybrid composition containing a siloxane bond and a hydrocarbon chain. The monolithic porous material properly prepared through the sol-gel process utilizing phase separation exhibits a low pressure of flowing a solution (column pressure), and high separation efficiency as a separation medium in high performance liquid chromatography. It is also known that pore surface sites of the monolithic porous material effectively contact solute molecules dissolved in the solution.

When a solution flows through a reaction support column to perform a chemical reaction, it is possible to improve energy efficiency with a simple process. It is also expected to reduce solvent consumption and drastically reduce environmental load. However, it is difficult to control a structure of a support column and obtain high performance, thereby hindering development.

### Disclosure of the Invention

### Objects of the invention

As a result of study, the inventors found that it is possible to manufacture a monolithic reactive porous material containing a reactive site on a pore surface and capable of performing a chemical reaction with solute molecules contacting at a solid-liquid interface. In the method, a starting material containing a reactive site is dissolved in a sol-gel reaction solution containing silicon dioxide (silica), a metal oxide forming a gel network, or an organic-inorganic hybrid composition containing a siloxane bond and a hydrocarbon chain, thereby inducing sol-gel transformation accompanying phase separation. Alternatively, a compound containing a reactive site reacts with a porous surface of the monolithic reactive porous material in a proper step between the porous gel formation and the final heat treatment.

### Summary of the Invention

According to the present invention, a method of producing a monolithic reactive porous material includes adding a compound containing a reaction site in a sol-gel reaction solution, and inducing sol-gel transformation accompanying phase separation, so that it is possible to produce the reactive porous material with open pores and reactive sites introduced on a surface thereof and having a backbone substantially formed of metalloxane bonds and hydrocarbon chains.

In the invention, the open pores have a diameter of 100 nm or greater, and a volume fraction of 20% or greater.

The porous material to be a support may be formed in a column shape with a covered side surface, or filled in a capillary with a diameter of less than 1 mm or a fine groove with a width of less than 100 µm on a substrate. The fine groove may be connected to form a continuous flow channel.

The reaction site includes a noble metal catalyst; a metal oxide catalyst; a biochemical catalyst such as an enzyme; a protein or polypeptide inducing an antigen-antibody reaction; a multiple bond capable of an addition reaction; an organic functional group capable of a ring-opening reaction such as an epoxy ring; an organic functional group capable of a poly-condensation reaction; a acidic or basic functional group; an ion exchange functional group; a donor or acceptor of a charge transfer reaction; a functional group capable of forming a metal complex; a functional group containing a complex metal; and a combination thereof.

The reaction site is a surface of a fine particle coexisting during a sol-gel reaction.

The support produced by the method of the present invention is the monolithic reactive porous support having the reactive site on the backbone surface thereof and the pores with a diameter of 100 nm or greater.

According to the present invention, a system is formed of a combination of several monolithic reactive porous materials produced by the method of the present invention.

### Brief Description of the Drawings

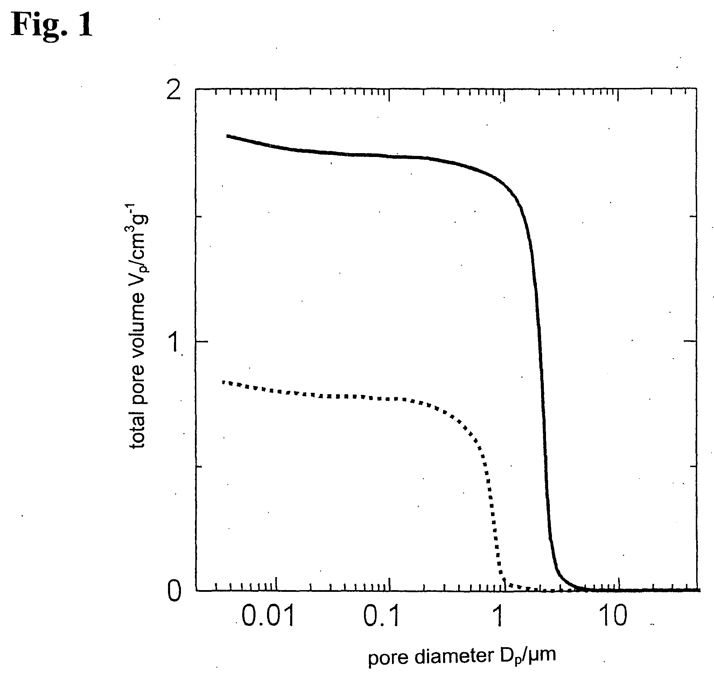

Fig. 1 is a graph showing a pore size distribution of a reactive porous support containing vinyl-groups determined by a mercury intrusion method, wherein a molar ratio in a starting composition is tetramethoxysilane : vinyltrimethoxysilane = 2 : 8, a solid line represents a sample with a molar ratio of formamide : methanol : water = 1 : 3 : 5 in the starting composition, and a hidden line represents a sample with a molar ratio of formamide : methanol : water = 0.4 : 3 : 1.5 in the starting composition.

### Detailed Description of Preferred Embodiments

According to the present invention, in a method of producing a monolithic reactive porous material, it is possible to manufacture the monolithic reactive porous material containing a reaction site introduced on a pore surface of a backbone structure with a proper method and open pores with a uniform size distribution formed through a sol-gel reaction accompanying phase separation. More specifically, the method includes adding a compound containing a reactive site in a sol-gel reaction solution, and inducing sol-gel transformation accompanying phase separation to produce the reactive porous material with open pores and reactive sites on a surface thereof and having a backbone substantially formed of metalloxane bonds and hydrocarbon chains.

The open pore preferably has a diameter of 100 nm or greater, more preferably 200 to 10,000 nm. A volume fraction of the open pore is more than 20%, preferably more than 40%. According to the invention, the pore material may be formed in a space with a shape and a size defined by a rigid container wall. In such a space, it is possible to obtain a volume fraction of substantially 100%. A macro-pore with a diameter of 100 nm or greater is formed in an area occupied by a solvent phase produced upon phase separation through a normal drying process without combustion or thermal decomposition. Accordingly, when a co-continuous structure in which a solvent phase and a gel phase are continuously mingled is produced, it is possible to obtain a sharp size distribution. When the pores are prepared to have a large average size and a large volume fraction, it is possible to reduce pressure loss of a monolithic reactive porous column. Accordingly, it is possible to flow fluid through a combination of several columns or a branched column system with a general pump.

In the method, a starting material containing a functional group to be a reactive site is dissolved in a solution. In the solution, the starting material reacts with a precursor of a monolithic porous gel such as silica, a metal oxide forming a gel network, and an organic-inorganic hybrid composition containing a siloxane bond and a hydrocarbon chain. As a result, it is possible to produce a gel of the composition with continuous pores having a diameter of 100 nm or greater. Alternatively, after a gel of the composition with continuous pores having a diameter of 100 nm or greater is produced, a compound containing reactive sites additionally reacts with a porous surface of the monolithic reactive porous material in a proper step between the wet gel formation and a final drying heat treatment.

Phase separation is a phenomenon in which a phase having a composition different from that of a starting material is formed through precipitation or deposition during a process of producing a material. In a sol-gel reaction system, in general, a phase rich in a network forming component inducing gel formation is separated from a phase rich in a solvent component inducing no gel formation. When each of the phases is formed, an element diffuses against a concentration gradient with a difference in chemical potentials as a driving force. The elements continue to move until each of the phases reaches an equilibrium state under a given temperature and a given pressure. When a starting material contains a material having a reactive site, and phase separation and a sol-gel reaction occur under a condition in which the starting material containing a material having a reactive site does not affect a control of a porous structure, it is possible to form a reactive site chemically bonded to a pore surface of a monolithic porous material formed of a metal oxide forming a gel network or an organic-inorganic hybrid composition according to a chemical characteristic of the starting material containing a material having a reactive site.

In the present invention, it is necessary to perform the sol-gel reaction accompanying phase separation to obtain a porous structure having open pores for producing a solvent flow type reactive column. However, it is not necessary to introduce the reactive site to the porous structure when the sol-gel reaction is performed. Accordingly, when it is difficult to add the starting material at a start of the sol-gel reaction, at first, it is possible to produce a monolithic porous material formed of silica, a metal oxide forming a gel network, or an organic-inorganic hybrid composition. Then, a compound containing reactive sites additionally reacts with a pore surface of the monolithic porous material in a proper step between the wet gel formation and the drying heat treatment, thereby obtaining the monolithic reactive porous support. Similarly, it is possible to attach a different reactive site to a pore surface having a reactive site through an addition reaction, or to chemically modify a reactive site introduced in advance, thereby utilizing as a reactive support.

The network forming component induces the gel formation in the sol-gel reaction, and the precursor of the network forming component includes metal alkoxides, metal complexes, metal salts, organic modified metal alkoxides, organic cross-linked metal alkoxides, and partial hydrolyzed products or oligomers, i.e., partial polymerized products, thereof. It is also possible to use sol-gel transformation associated with a change in pH of water-glass or an alkaline silicate solution.

In the method of the present invention, in a state that a water-soluble polymer, a surfactant, or a compound inducing phase separation co-exists, a metal compound containing a hydrolytic functional group is hydrolyzed. At the same time or afterward, a catalyst, enzyme, or a third component (a compound containing a reactive site) is added. After a product is solidified, the product is dried and heat-treated.

The water-soluble polymer theoretically includes a water-soluble organic polymer dissolved in water at an appropriate concentration, and needs to be uniformly dissolved in a system containing alcohol produced from the metal compound containing the hydrolytic functional group. For example, a preferred polymer includes a polymeric metal salt such as sodium or potassium salts of poly(styrene sulfuric acid); a polymeric acid such as poly(acrylic acid) forming poly-anions through dissociation; a polymeric base such as poly(allylamine) and poly(ethyleneimine) forming poly-cations through dissociation; and a neutral polymer having ether bonds such as poly(ethylene oxide), poly(vinylpyrrolidone), poly(acrylamide), and polyoxyethylene-polyoxypropyrene-polyoxyethylene triblock copolymers. Instead of the organic polymers, it is possible to use an organic solvent with relatively high polarity such as polyalcohols, acid amides, and surfactants. In this case, it is preferred to use ethylene glycol and glycerol as the polyalcohol, fomamide as the acid amide, and a cationic surfactant such as tetra-ammonium salts or a nonionic surfactant such as polyoxyethylene alkylethers as the surfactant.

The metal compound containing the hydrolytic functional group includes metal alkoxides and oligomers thereof. It is preferred to use a small number of carbons such as methoxy, ethoxy, and propoxy groups. A metal element includes a metal of a final oxide such as, for example, Si, Ti, Zr, and Al. It is possible to use one type or two or more types. The oligomer typically includes a decamer as far as the oligomer is dissolved or dispersed homogeneously in alcohol. Further, it is preferred to use alkyl-alkoxysilanes having some of alkyl groups replaced with alkoxy groups; cross-linked alkoxides having a hydrocarbon cross-linked structure binding two or more metals; and their oligomers typically up to decamers. It is also possible to use alkyl-substituted-alkoxides having a metal element such as titanium, zirconium, and aluminium substituting silicon.

An acid solution preferably includes a solution of mineral acid such as hydrochloric acid and nitric acid with a normality of 0.001 or greater, or a solution of organic acid such as formic acid and acetic acid with a normality of 0.1 or greater.

In the hydrolysis, the solution is maintained at a temperature between a room temperature and 80°C for 0.5 to 3 hours.

The catalyst, enzyme, and third component containing the reactive functional groups provide the porous support structure with reactivity. They include a noble metal or transition metal catalyst such as gold, rhodium, rhutenium, platinum, and palladium; a metal oxide catalyst forming electrons on a surface thereof through a stimulation of heat (for example, titanium oxide and nickel oxide); an enzyme capable of providing activity in vitro (for example, urease, lipase, and trypsin); an enzyme in a quasi-bio-protective-structure for preventing deactivation of the enzyme and maintaining activity (for example, lipase protected in a micelle of polyoxyethylene-alkylether); an organic functional group having a multiple covalent bond or a cyclic bond (for example, a vinyl group, an allyl group, an epoxy group, an ε-caprolactone ring); a metal complexe stabilized or activated in a specific ligand (for example, rhodium coordinated with an indenyl group, zirconium coordinated with an acetylacetone group, platinum coordinated with two ammonium and two chloride ions). The third component is introduced to the surface of the porous support through physical adsorption, chemical adsorption, or chemical bonding.

According to the manufacturing method of the present invention, it is possible to obtain the monolithic reactive porous support formed of a backbone substantially formed of metalloxane bonds and hydrocarbon chains and having co-continuous open pores and chemically active sites on the surface thereof.

The term "substantially" means that the number of atoms contained in the metalloxane bonds or the hydrocarbon chains is greater than that of atoms contained as modification.

In the present invention, it is possible to combine a plurality of supports for different chemical reactions. If necessary, it is possible to join a plurality of reactive supports or form a branch to a plurality of reactive supports.

The porous material to be the support may be formed in a column shape with a covered side surface, or filled in a capillary with a diameter of less than 1 mm or a fine groove with a width of less than 100 µm on a substrate. The fine groove may be connected to form a continuous flow channel.

In the present invention, the monolithic reactive porous support has the reactive sites on the surface of the backbone and the pores with a diameter of 100 nm or greater. A plurality of the monolithic reactive porous supports can be combined to use as a system device, for example, a multi-dimensional liquid chromatography system.

According to the present invention, it is possible to obtain the reactive porous support having the reactive sites on the surface thereof and the continuous open pores. The supports formed in a column shape can be combined for multiple reactions.

### Examples

### [Example 1]

First, formamide, a polar solvent, was uniformly dissolved in 1 mol nitric acid aqueous solution with a molar ratio of formamide : methanol : water = 1 : 3 : 5. A mixture of tetramethoxysilane and vinyltrimethoxysilane in a molar ratio of 2 : 8 was added to the solution to perform the hydrolysis reaction. After stirring the solution for 5 minutes, the resultant solution was gelled in a closed container at a temperature of 40°C to obtain a gel formed of siloxane bonds and having a macro-porous structure with vinyl groups on a surface thereof. After aging the gel at the same temperature for three days, the solvent was evaporated at 80°C to obtain a monolithic porous support. The monolithic support was machined into a column shape, and a side surface thereof was covered with a thermosetting resin and both ends thereof opened to form a reactive solution flowing column having the vinyl groups on a macro-pore surface thereof.

A size distribution of pores of the reactive column was determined by a mercury intrusion method, and is shown as a solid line in Fig. 1.

### (Bromine absorption experiment)

A 50 ml of 0.1 mol aqueous bromine solution was circulated through the porous solution flowing column with the carbon double bonds obtained by the method (column volume; about 2 cm³) at a room temperature and a flow rate of 1 ml/min. A bromine concentration was determined by optical absorption with a specific time interval. After 5 hours, it was confirmed that more than 80% of bromine was absorbed in the column.

### [Example 2]

In Example 1, the concentration of formamide or the nitric acid solution was changed (a molar ratio of the starting composition; formamide : methanol : water = 0.4 : 3 : 1.5) to obtain a gel with a different macro-pore system. The gel with macro-pores having a pore diameter of about 1 µm has a pore size distribution determined by the mercury intrusion method as shown as a hidden line in Fig. 1. When the diameter of the macro-pore decreases, flow resistance and a rate of absorbing bromide increase. When the diameter of the macro-pore increases, the flow resistance and the rate of absorbing bromide decrease.

### [Example 3]

Two and three of the columns obtained in example 1 are connected, and the bromine absorption experiment was conducted. When the number of connection increases, the flow resistance and the rate of absorbing bromine increases (in a case of the two columns, more than 80% of bromine was absorbed after 3 hours; in a case of the three columns, more than 80% of bromine was absorbed after 2 hours).

### Industrial Applicability

The porous support obtained with the method of the present invention can be used as the reactive support for inducing a chemical reaction or functioning as a catalyst of a chemical reaction on the pore surface thereof.

## Claims

1. A method of producing a monolithic reactive porous support, comprising:
adding a component containing a reactive site to a sol-gel reaction solution, and
inducing sol-gel transformation accompanying phase separation to obtain the reactive porous support having a backbone substantially formed of metaloxane bonds and hydrocarbon chains, open pores, and reactivity on a surface thereof.

2. A method of producing a monolithic reactive porous support according to claim 1, wherein said open pores have an average diameter of 100 nm or greater and a volume fraction of 20% or greater.

3. A method of producing a monolithic reactive porous support according to claim 1 or 2, wherein a porous material to become said reactive porous support includes a porous material formed in a column shape with a covered side surface, in a capillary with a diameter of 1 mm or less, or in a groove with a width of 100 µm or less formed in a substrate, or combination thereof to form a continuous flow structure.

4. A method of producing a monolithic reactive porous support according to one of claims 1 to 3, wherein said reactive site includes a noble metal catalyst; a metal oxide catalyst; a biochemical catalyst such as an enzyme; a protein or polypeptide inducing an antigen-antibody reaction; a multiple bond capable of an addition reaction; an organic functional group capable of a ring-opening reaction such as an epoxy ring; an organic functional group capable of a poly-condensation reaction; a acidic or basic functional group; an ion exchange functional group; a donor or acceptor of a charge transfer reaction; a functional group capable of forming a complex; a functional group containing a complex metal; and a combination thereof.

5. A method of producing a monolithic reactive porous support according to one of claims 1 to 3, wherein said reactive site is a surface of a fine particle coexisting during a sol-gel reaction.

6. A.support having a backbone structure obtained by the method according to one of claims 1 to 5, said backbone structure having the reactive site on a surface thereof and pores with a diameter of 100 nm or greater.

7. A system device including a combination of a plurality of the monolithic reactive porous supports according to claim 6.
